# EUROPEAN PATENT SPECIFICATION

(11) **EP 1 435 630 B1**
(45) Date of publication and mention of the grant of the patent: **05.04.2006**
(21) Application number: 02801491.8
(22) Date of filing: 04.10.2002
(51) Int. Cl.: H01B 1/06, H01B 13/00, H01M 8/02, H01B 1/04, H01M 8/10, H01B 1/12

(54) **PROTON CONDUCTOR, PROCESS FOR ITS PRODUCTION AND ELECTROCHEMICAL DEVICES**
PROTONENLEITER, PROZESS ZU SEINER HERSTELLUNG UND ELEKTROCHEMISCHE EINRICHTUNGEN
CONDUCTEUR PROTONIQUE, SON PROCEDE DE FABRICATION ET DISPOSITIFS ELECTROCHIMIQUES

(30) Priority: 11.10.2001 JP 2001313995; 14.05.2002 JP 2002138210
(43) Date of publication of application: 07.07.2004
(73) Proprietor: SONY CORPORATION, Tokyo 141-0001 (JP)
(72) Inventor: LI, Yong Ming, c/o SONY CORPORATION, Tokyo 141-0001 (JP); HINOKUMA, Koichiro, c/o SONY CORPORATION, Tokyo 141-0001 (JP)
(74) Representative: Rupp, Christian
(86) International application number: PCT/JP2002/010374
(87) International publication number: WO 2003/034445

(56) References cited:
- EP-A- 1 071 149
- WO-A1-00/66254
- WO-A1-01/06519
- WO-A1-94/03503
- JP-A- 2000 011 756
- US-A- 6 162 926
- CHENG F ET AL: "Organophosphorus chemistry of fullerene: synthesis and biological effects of organophosphorus compounds of C60" TETRAHEDRON, ELSEVIER SCIENCE PUBLISHERS, AMSTERDAM, NL, vol. 57, no. 34, 20 August 2001 (2001-08-20), pages 7331-7335, XP004301016 ISSN: 0040-4020
- CHENG F ET AL: "Synthesis and optical properties of tetraethyl methano[60]fullerenediphosphonate" TETRAHEDRON LETTERS, ELSEVIER SCIENCE PUBLISHERS, AMSTERDAM, NL, vol. 41, no. 20, May 2000 (2000-05), pages 3947-3950, XP004203294 ISSN: 0040-4039

## Description

### Technical Field

The present invention relates to an electrochemical device and a manufacturing method for producing a proton conductor and also to the use of a proton conductor in an electrochemical device.

### Background Art

Active developmental works for the fuel cell are going on in various industrial sectors. Because of its high efficiency and freedom from environmental pollution, the fuel cell is expected to be an environmentally compatible electric energy generator in the next generation.

The fuel cell is broadly classified according to the kind of the proton conductor used therein, because its performance relies on the proton conductor which is greatly affected by operating temperature and conditions. The fact that the fuel cell enormously varies in performance depending on the proton conductor used therein suggests that improvement in the proton conductor is an important key to improvement in the fuel cell.

Fuel cells running at higher than normal temperature and lower than 100°C are usually provided with a proton-conducting polymeric membrane which is a solid polymeric film. It is exemplified by "Nafion" (from DuPont) and "Gore Membrane" (from Gore Inc.), which are made of perfluorosulfonic acid resin. They are still on the way to improvement. Reports on new proton conducting polymeric membranes made of hydrocarbon polymers have recently come to appear in academic societies and papers.

Among comparatively new proton conductors of inorganic metal oxide are polymolybdic acids and oxides with many molecules of hydration water, such as H₃M₁₂PO₄₀.29H₂O (M = Mo or W) and Sb₂O₅·nH₂O.

These polymeric materials and hydrated compounds in their wet state exhibit high proton conductivity in the vicinity of normal temperature. That is, the perfluorosulfonic acid resin, for example, exhibits a considerably high proton conductivity even at normal temperature because it gives rise to protons ionized from the sulfonic acid group. These protons bind (through hydrogen bond) to water abundant in the polymeric matrix, thereby forming protonized water or oxonium ions (H₃O⁺), and protons in the form of oxonium ions smoothly migrate through the polymeric matrix.

On the other hand, there has recently been developed a new proton conductor which is entirely different in conducting mechanism from those mentioned above. It is based on the finding that complex metal oxides of perovskite structure, such as Yb-doped SrCeO₃, exhibit proton conductivity in the absence of water as a medium for migration. Proton conduction in these complex metal oxides is considered to take place as protons channel by themselves through the space among oxygen ions forming the skeleton of the perovskite structure.

A presumable mechanism for proton conduction is as follows. Conducting protons do not originally exist in the complex metal oxide but they are evolved only by the reaction which takes place when the perovskite structure comes into contact with water vapor contained in the surrounding atmospheric gas, with the result that water molecules at high temperatures react with the oxygen defects formed in the perovskite structure by doping, thereby giving protons.

Unfortunately, the proton conductor mentioned above is said to have the following disadvantages.

The matrix material such as perfluorosulfonic acid resin mentioned above needs to be continuously kept sufficiently wet during use so that it retains its high proton conductivity. Moreover, it is limited in the range of operating temperatures because the water contained in the matrix has to be protected from freezing or boiling.

The proton conductor of inorganic metal oxide, such as H₃M₁₂PO₄₀.29H₂O (M = Mo or W) and Sb₂O₅·nH₂O, needs to be kept highly wet to retain its hydration water so that it exhibits significant proton conduction. Moreover, a certain kind of perovskite oxide, such as SrCeO₃, needs to be kept at an operating temperature as high as 500°C or above. Also, it rapidly decreases in proton conductivity in the state of low humidity.

A proton conductor mainly comprising a fullerene derivative having one or more proton releasable groups introduced to component carbon atoms of a fullerene molecule is described in EP 1 071 149. This proton conductor is used in making fuel cells made small-sized and simple.

Methane phosphonate and methanophosphonic acids C₆₀ derivatives are described in Cheng F., et al.: "Organophosphorus chemistry of fullerene: synthesis and biological effects of organophosphorus compounds of C₆₀" Tetrahedron, Elsevier Science Publishers, Amsterdam, NL, vol. 57, no. 34, 20 August 2001 (2001-08-20), pages 7331-7335, XP004301016 ISSN: 0040-4020. These compounds have been shown to have photo-induced cytotoxicity.

As mentioned above, conventional proton conductors have the disadvantage of being highly dependent on atmosphere (or requiring the supply of moisture or water vapor) and requiring a very high or low operating temperature, with the range of operating temperature being limited.

The foregoing leads to a fuel cell system with ancillary units such as humidifier, which is inevitably bulky and expensive.

The present invention was completed in order to solve the above-mentioned problems. It is an object of the present invention to provide a new proton conductor and its manufacturing method and also to provide an electrochemical device, said proton conductor exhibiting a high proton conductivity in a dry atmosphere at temperatures in a comparatively wide range including room temperature.

### Disclosure of the Invention

#1 The present invention is directed to an electrochemical device comprising a proton conductor which comprises a derivative of a substance having functional groups binding thereto, said substance being composed of at least one species selected from the group consisting of fullerene molecules, clusters composed mainly of carbon, and linear or tubular carbon structures, and said functional groups having proton (H⁺) dissociative groups and binding to said substance through a three- or many-membered ring structure.

Here, the term "proton (H⁺) dissociative groups" implies those groups from which protons separate by ionization. The term "dissociation of protons" implies separation of protons from the group by dissociation.

The proton conductor is a derivative of a substance having functional groups binding thereto, said substance being composed of at least one species selected from the group consisting of fullerene molecules, clusters composed mainly of carbon, and linear or tubular carbon structures, and said functional groups having proton dissociative groups. Because of these features, it has a limited dependence on atmosphere and exhibits continuously a high proton conductivity in dry air at temperatures widely ranging from low to high. It is not affected by the presence of water.

The proton conductor is characterized in that said functional groups have proton (H⁺) dissociative groups and bind to said substance through a three- or many-membered ring structure. This feature contributes to improved heat resistance and chemical stability.

#11 The present invention is directed also to a method for producing a proton conductor, which comprises a step of preparing a derivative of a substance having functional groups binding thereto, said substance being composed of at least one species selected from the group consisting of fullerene molecules, clusters composed mainly of carbon, and linear or tubular carbon structures, and said functional groups having ester groups as the precursor of proton dissociative groups and binding to said substance through a three- or many-membered ring structure; a step of hydrolyzing the derivative with alkali hydroxide; and a step of subjecting the hydrolyzate to ion exchange, thereby forming the proton dissociative groups.

The method according to the present invention permits easy and efficient production of the proton conductor which has outstanding characteristics as mentioned above. It reduces production cost and suits for synthesis in large quantities.

#8 The present invention is directed to an electrochemical device which comprises a first electrode, a second electrode, and a proton conductor held between these two electrodes, said proton conductor being a substance having functional groups binding thereto, said substance being composed of at least one species selected from the group consisting of fullerene molecules, clusters composed mainly of carbon, and linear or tubular carbon structures, and said functional groups having proton dissociative groups and binding to said substance through a three or many-membered ring structure.

The electrochemical device according to the present invention is characterized in that the proton conductor held between the first and second electrodes is composed of the derivative having the excellent characteristics as mentioned above. Therefore, it produces the same effect as the proton conductor of the present invention. It does not need humidifier and ancillary units, which helps realize a small-sized simple system.

#2 The proton conductor comprises a substance having functional groups binding thereto, said substance being composed of at least one species selected from the group consisting of fullerene molecules, clusters composed mainly of carbon, and linear or tubular carbon structures, and said functional groups being represented by the general formula (1) or (2) below. 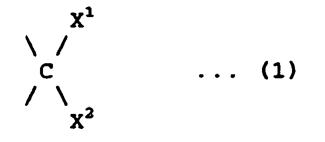 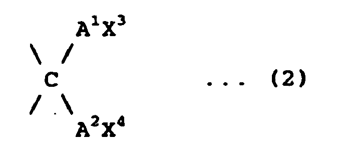 where X¹ and/or X², and X³ and/or X⁴, are identical or different proton dissociative groups, and A¹ and A² are identical or different alkylene moieties represented by any of -O-, -R-, -O-R-, -R-O-, -O-R-O-, and -R-O-R- (where R is CₓH_{y} (x is an integer of 1 to 20 and y is an integer of 0 to 40)).

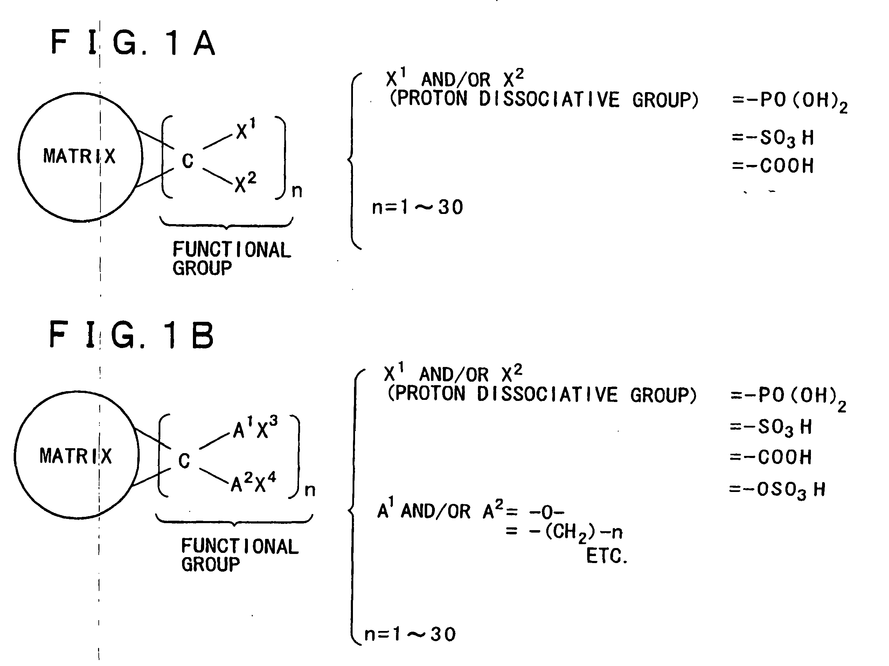

The proton conductor defined above is schematically shown in Figs. 1A and 1B. It consists of a matrix (to which the functional groups are introduced) and the functional groups having the proton dissociative groups shown in the general formula (1) or (b). The functional groups bind to the matrix through the three-membered ring structure. This ring structure is stable, and there are a plurality of binding sites, so that any broken linkage is restored. This greatly contributes to the chemical stability and thermal resistance of the proton conductor. The three-membered ring structure may be replaced by the many-membered ring structure for better chemical stability and thermal resistance.

In the general formulas (1) and (2) above, at least one of the proton dissociative groups should preferably be -PO(OH)₂, -SO₃H, or -COOH. However, in the general formula (2), at least one of the proton dissociative groups may be -OSO₃H.

The number of the functional groups that bind to one matrix may range from 1 to 30 depending on the raw materials (and their molar ratio) from which the matrix is synthesized. The functional groups may be added to all the double bonds in the matrix. The more the number of functional groups increases, the more the number of protons increases, contributing to conductivity.

#3 The proton conductor comprises a substance having functional groups binding thereto, said substance being composed of at least one species selected from the group consisting of fullerene molecules, clusters composed mainly of carbon, and linear or tubular carbon structures, and said functional groups being represented by the general formula (3) below. 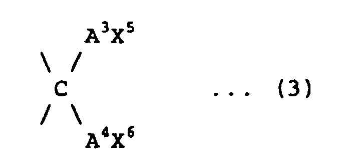 where X⁵ and/or X⁶ are identical or different proton dissociative groups, and A³ and A⁴ are identical or different fluorinated alkylene moieties represented by any of -O-, -R'-, -O-R'-, -R'-O-, -O-R'-O-, and -R'-O-R"- (where R' and R" are Cₓ,F_{y},H_{z}, (x' is an integer of 1 to 20, y' is an integer of 1 to 40, and z' is an integer of 0 to 39)).

The proton conductor defined above has greatly improved chemical stability and thermal resistance for the same reason as mentioned above.

In the general formula (3) above, at least one of the proton dissociative groups should preferably be -PO(OH)₂, -SO₃H, or -COOH.

If the proton dissociative group is -PO(OH)₂, each functional group binding to the matrix has four dissociative groups, and this leads to higher proton conductivity and better chemical stability. If the proton dissociative group is -SO₃H, the resulting product has higher proton conductivity owing to its high tendency toward proton dissociation.

#7 The proton conductor comprises containing therein a carbonaceous material represented by the molecular formula (1) or (2) below.

Molecular formula (1) : C₆₀=(C(PO(OH)₂)₂)ₙ

Molecular formula (2) : C₆₀=(C(SO₃H)₂)ₙ

(where n is 1 to 30).

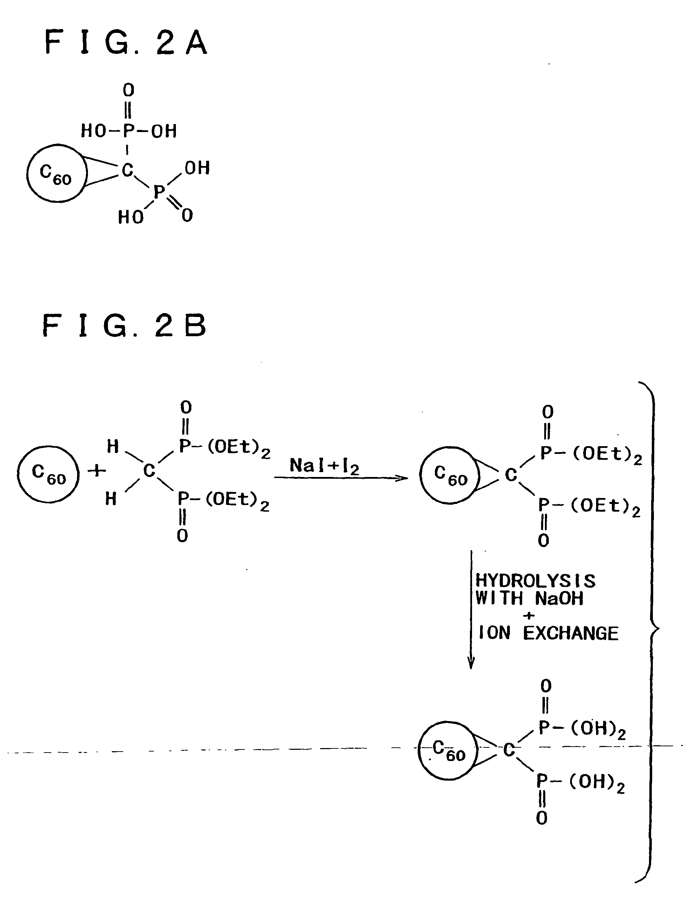

Fig. 2A is a schematic diagram showing the derivative as the proton conductor of the present invention, which is represented by the molecular formula (1) C₆₀=(C(PO(OH)₂)₂)ₙ.

It is to be noted in Fig. 2A that the matrix to which the functional group is introduced is a fullerene molecule (C₆₀) and the functional group binds to the fullerene molecule through the three-membered ring structure. This construction contributes to the greatly improved chemical stability and thermal resistance of the resulting material. The proton dissociative group (-PO(OH)₂) permits each functional group binding to the fullerene molecule to provide four protons that can be dissociated. This leads to a high proton conductivity.

The proton conductor comprised in the electrochemical device which is shown in Fig. 2A, may be produced by the reaction scheme as shown in Fig. 2B, which proceeds as follows.

First, the fullerene molecules (C₆₀, for example) are made to react with tetraethyl methylenediphosphonate in the presence of iodine and NaI to give the desired derivative which is composed of the fullerene molecules and the functional groups binding thereto through the three-membered ring structure, said functional groups having ester groups and serving as the precursor of the proton dissociative group.

Then, the thus obtained derivative is hydrolyzed with the alkali oxide mentioned above (sodium hydroxide, for example). The resulting hydrolyzate undergoes ion exchange. In this way, there is obtained the proton conductor of the present invention which is composed of the fullerene molecules (C₆₀) and the functional groups binding thereto through the three-membered ring structure, said functional groups having -PO(OH)₂ capable of proton dissociation.

The advantage of the manufacturing method according to the present invention lies in the ability to produce easily and efficiently in large quantities the proton conductor which has outstanding characteristic properties.

The proton conductor of the present invention suits for a variety of electrochemical devices. In other words, it may be applied to an electrochemical device which basically consists of a first electrode and a second electrode and a proton conductor held between them. In such an electrochemical device, the first and/or second electrode may be a gas electrode or an active material electrode.

### Brief Description of the Drawings

Figs. 1A and 1B are schematic diagrams showing the proton conductor in one embodiment of the present invention.
Figs. 2A and 2B are respectively a schematic diagram showing the proton conductor and a reaction scheme involved in the manufacturing method in the same as above.
Fig. 3 is a schematic diagram showing the mechanism of proton conduction in a fuel cell in the same as above.
Fig. 4 is a schematic sectional view showing a fuel cell in the same as above.
Figs. 5A and 5B are schematic diagrams showing the fullerene molecule as the matrix of the proton conductor in the same as above.
Fig. 6 is a schematic diagram showing a variety of examples of carbon cluster as the matrix of the proton conductor in the same as above.
Fig. 7 is a schematic diagram showing another example of carbon cluster (having the partial fullerene structure) in the same as above.
Fig. 8 is a schematic diagram showing another example of carbon cluster (having the diamond fullerene structure) in the same as above.
Fig. 9 is a schematic diagram showing another example of carbon cluster (with clusters binding to one another) in the same as above.
Fig. 10 is a schematic diagram showing carbon nanotube and carbon fiber as the matrix of the proton conductor in the same as above.
Fig. 11 is a graph showing the result of FT-IR measurement in one example of the present invention.
Fig. 12 is a graph showing the result of TG-DTA measurement in the same as above.
Fig. 13 is a graph showing the result of RGA measurement in the same as above.
Fig. 14 is a diagram showing an equivalent circuit in the same as above.
Fig. 15 is a diagram showing the complex impedance measured for the fullerene derivative of phosphate type (in the form of aggregate pellets) in the same as above.
Fig. 16 is a graph showing the result of FT-IR measurement.
Fig. 17 is a diagram showing the complex impedance measured for the fullerene derivative of sulfonate type (in the form of aggregate pellets) in the same as above.

### Best Mode for Carrying out the Invention

The following is a description of a fuel cell which has the above proton conductor and which is designed such that the first electrode is supplied with fuel and the second electrode is supplied with oxygen.

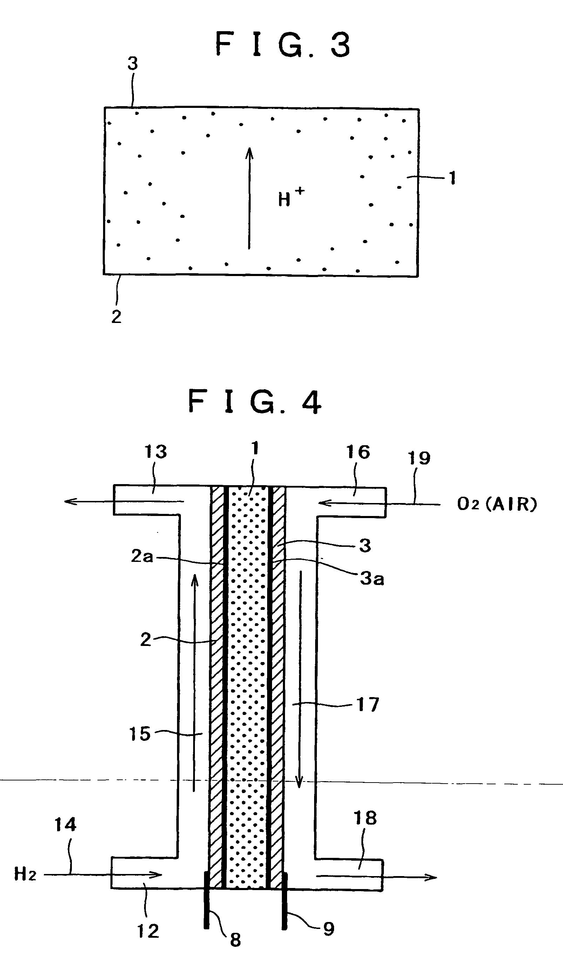

In this fuel cell, proton conduction takes place according to the mechanism schematically shown in Fig. 3. The proton conducting part 1 is held between the first electrode (which is supplied with hydrogen) and the second electrode (which is supplied with oxygen). Protons (H⁺) formed by dissociation migrate from the first electrode 2 to the second electrode 3 in the direction of the arrow.

Fig. 4 shows a typical example of a fuel cell provided with the proton conductor of the present invention. This fuel cell has an anode 2 (fuel electrode or hydrogen electrode) and a cathode 3 (oxygen electrode) facing each other, which are provided with terminals 8 and 9, respectively. On both electrodes are catalysts 2a and 3a which adhere closely to them or which are dispersed in them. Between these electrodes is held the proton conducting part 1. At the time of operation, the anode 2 is supplied with hydrogen from an inlet 12. Hydrogen is discharged from an outlet 13 (which is not essential). While fuel (H₂) is flowing through a passage 15, protons occur. These protons migrate, together with those protons which have occurred in the proton conducting part 1, toward the cathode 3, where they react with the oxygen (air) 19 which flows through a passage 17 from an inlet 16 to an outlet 18. In this way the desired electromotive force is produced.

The fuel cell constructed as mentioned above offers the advantage of giving a high proton conductivity because while protons are occurring due to dissociation in the proton conducting part 1, those protons supplied from the anode 2 migrate toward the cathode 3. Process in this manner obviates the necessity of humidifier etc., thereby making the system simple and light in weight.

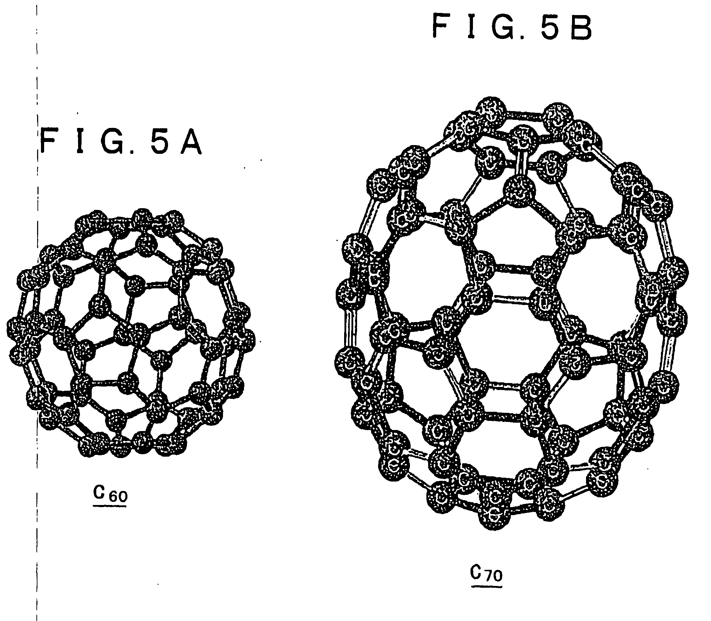

The fullerene molecules as the matrix to which the functional groups are introduced are not specifically restricted so long as they are in the form of spherical clusters. They are usually selected from C₃₆, C₆₀ (Fig. 5A) , C₇₀ (Fig. 5B), C₇₆, C₇₈, C₈₀, C₈₂, C₈₄, C₈₆, C₈₈, C₉₀, C₉₂, C₉₄, and C₉₆, which may be in the form of simple substance or mixture.

These fullerene molecules were found by mass spectrometry in the cluster beam produced by laser ablation of carbon in 1985. (Kroto, H.W.; Heath, J.R.; O'Brien, S.C.; Curl, R.F.; Smalley, R.E.: Nature 1985; 318, 162) It was five years later that its practical manufacturing method was established. There was found in 1990 a manufacturing method that employs arc discharge between carbon electrodes. Since then, the above-mentioned fullerene has attracted attention because of its possibility of finding use as a carbonaceous semiconductor material.

As mentioned above, the derivative is composed of the fullerene molecules and the functional groups binding thereto through a three- or many-membered ring structure. The derivative as a simple substance exhibits the proton conductivity differently from that as a bulk in the form of aggregate consisting of a large number of molecules, because the proton conductivity in the former case involves the migration of protons derived from a large quantity of dissociative groups originally present in the molecules. Proton conduction in this manner takes place continuously even in a low-humidity environment.

Moreover, the fullerene molecule mentioned above has electrophilicity, and this characteristic property seems to greatly promote the ionization of hydrogen ions from the highly acidic proton dissociative groups. This is a probable reason for the outstanding proton conductivity. In addition, since one fullerene molecule permits a considerably large number of the functional groups to bind thereto through the three- or many-membered ring structure, there will be a large number of protons in a high density per unit volume of the proton conductor. This leads to the substantial conductivity.

The derivative as the proton conductor is composed mainly of carbon atoms constituting the fullerene molecules. Therefore, it is light in weight, stable to degradation, and free of contaminants. The fullerene, which is rapidly decreasing in production cost, is considered to be an almost ideal carbonaceous material among others from the resource, environmental, and economical point of view.

The thus obtained fullerene derivative is formed into film by coating, rolling, or the like, and the resulting film is used as the proton conductor in the electrochemical device according to the present invention.

The proton conductor mentioned above may be composed substantially of the fullerene derivative alone or in combination with a binder. Two or more species of the fullerene derivative may form a polymer through their direct or indirect bonding.

The proton conductor may be used in the form of film which is prepared by press-molding the fullerene derivative containing or not containing a binder. The binder makes the proton conductor strong.

The binder may be one or more kinds of known polymeric material which helps film forming. The proton conductor composed of the fullerene derivative containing a binder will exhibit proton conductivity in the same way as the proton conductor composed of the fullerene derivative alone. Moreover, the fullerene derivative containing a binder of polymeric material yields the proton conductor in the form of strong, flexile, gas-impermeable film (usually thinner than 300 µm), which is different from that prepared by compressing a powder of the fullerene derivative containing no binder.

Incidentally, the binder of polymeric material is not specifically restricted so long as it does not react with the fullerene derivative to impede proton conductivity but it helps film forming. The one which conducts no electrons and has good stability is used. It is exemplified by polyfluoroethylene, polyvinylidene fluoride, and polyvinyl alcohol, which are desirable because of the following reasons.

Polytetrafluoroethylene helps forming a stronger thin film more easily with a less amount as compared with other polymeric materials. The amount of loading should be less than 3 wt%, preferably 0.5-1.0 wt%, which is enough to form a thin film ranging from 100 µm down to 1 µm in thickness.

Polyvinylidene fluoride and polyvinyl alcohol help form a proton conducting thin film with good gas impermeability. The amount of loading should be 5-15 wt%.

The above-mentioned three polymeric materials will not produce its effect as expected if their amount of loading is less than the lower limit specified.

Press molding, extrusion molding, or any other known method may be used to form the thin film of proton conductor from the fullerene derivative containing a binder.

The electrochemical device according to the present invention functions satisfactorily in the atmospheric air. Therefore, when used as a fuel cell, it provides electrochemical energy efficiently without the necessity of controlling pressure, temperature, and humidity. It also functions in the atmospheric air at low humidity without requiring a humidifier unlike the one provided with Nafion which is an H₃O⁺ ion conductor. This is because the proton conductor is formed from the fullerene derivative composed of fullerene molecules and the functional groups binding thereto through the three- or many-membered ring structure.

Owing to its ability to provide electrochemical energy in the atmospheric air at low humidity, the electrochemical device functions as a fuel cell which reaches the steady operating state in a short time. Incidentally, it may be provided with a humidifier so that it operates in the presence of water. However, this is not a requirement in the present invention.

The electrochemical device according to the present invention has an advantage over the conventional one provided with Nafion which is an H₃O⁺ ion conductor. The latter needs a dehumidifier to remove water accompanied by generation of electrochemical energy and water that has migrated to the cathode. By contrast, the former generates electrochemical energy without requiring a dehumidifier because it functions in such a way that the anode receives and electrolyzes hydrogen gas, thereby giving rise to protons, and the thus formed protons migrate to the cathode through the proton conductor of the present invention, at which protons react with oxygen to generate electrochemical energy. Consequently, the electrochemical device of the present invention is compact in size and applicable to general use.

According to the present invention, the above-mentioned fullerene derivative formed from fullerene molecules as the matrix may be replaced by the one which is formed from clusters of carbon molecules as the matrix. Such clusters are obtained by arc discharging across carbon electrodes. The desired derivative is obtained by bonding the above-mentioned functional groups to the clusters through the three- or many-membered ring structure.

The term "cluster" as used herein usually denotes an aggregate composed of several to hundreds of atoms binding or cohering together. This aggregate contributes to improved proton conductivity, high film strength, and easy layer forming, while retaining the chemical properties of its constituents. In addition, this aggregate is composed mainly of several to hundreds of carbon atoms binding together in any manner. The carbon cluster, which may contain a few foreign atoms, will hereinafter refer to any aggregate in which carbon atoms are predominant.

The proton conductor is composed mainly of the above-mentioned carbon cluster (as the matrix) and the above-mentioned functional groups binding thereto through the above-mentioned three- or many-membered ring structure. Consequently, it permits proton dissociation easily in a dry state and it produces the effect of proton conduction as does the proton conductor composed of the fullerene derivative. It also gives an extensive choice of carbonaceous raw materials because the carbon cluster embraces carbon in various forms as mentioned later.

The reason why the carbon cluster is used as the matrix is that good proton conductivity is attained only when the matrix is incorporated with the functional groups having a large number of proton dissociative groups and this object is achieved by the carbon cluster. The resulting solid proton conductor has an extremely high degree of acidity; however, it retains the atom-to-atom bonding (or it chemically changes very little) and maintains the film structure despite the high degree of acidity because the carbon cluster has good oxidation resistance and durability and keeps close bonding between constituent atoms, unlike the ordinary carbonaceous material.

The proton conductor derived from carbon cluster exhibits high proton conductivity even in a dry state. It takes on various forms as shown in Figs . 6 to 9. In other words, there are a large variety of raw materials from which to choose.

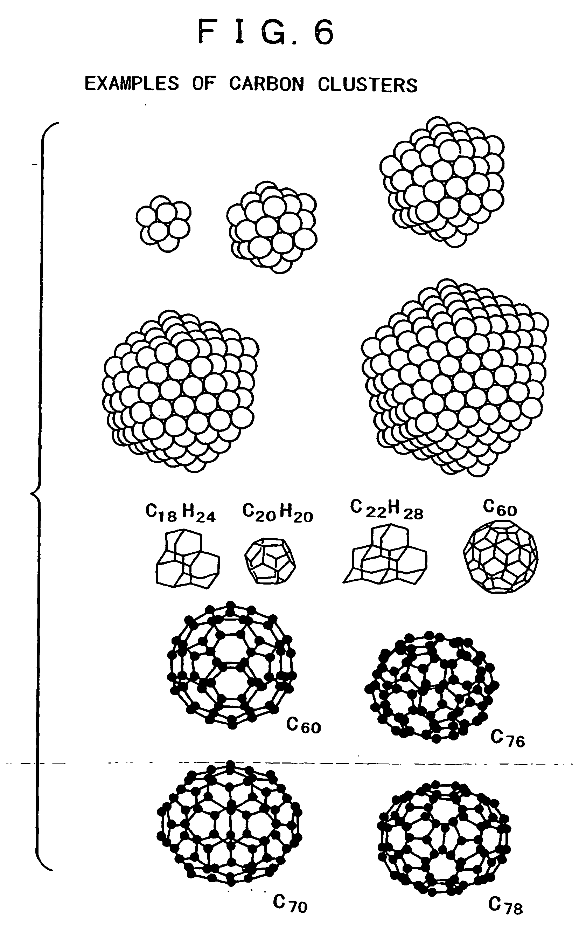

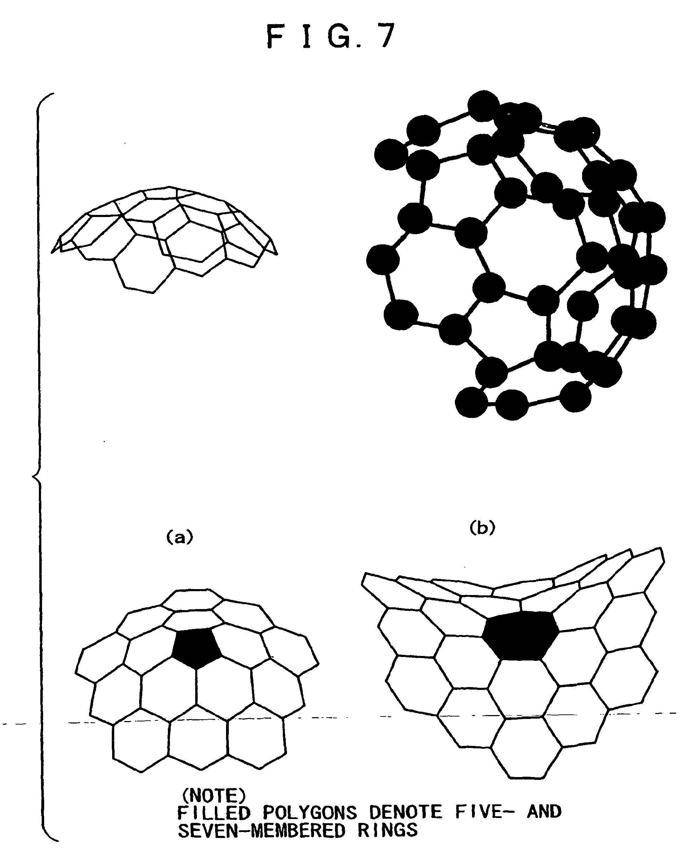

Fig. 6 shows some examples of carbon clusters each consisting of a large number of carbon atoms gathered together, which take on a spherical or spheroidal shape or a closed surface structure similar to them. Fig. 6 also shows fullerene molecules. Fig. 7 shows some examples of carbon clusters of spherical structure with a missing part. Such carbon clusters are characterized by the structure with an open end. They are found in by-products resulting from the production of fullerene by arc discharge.

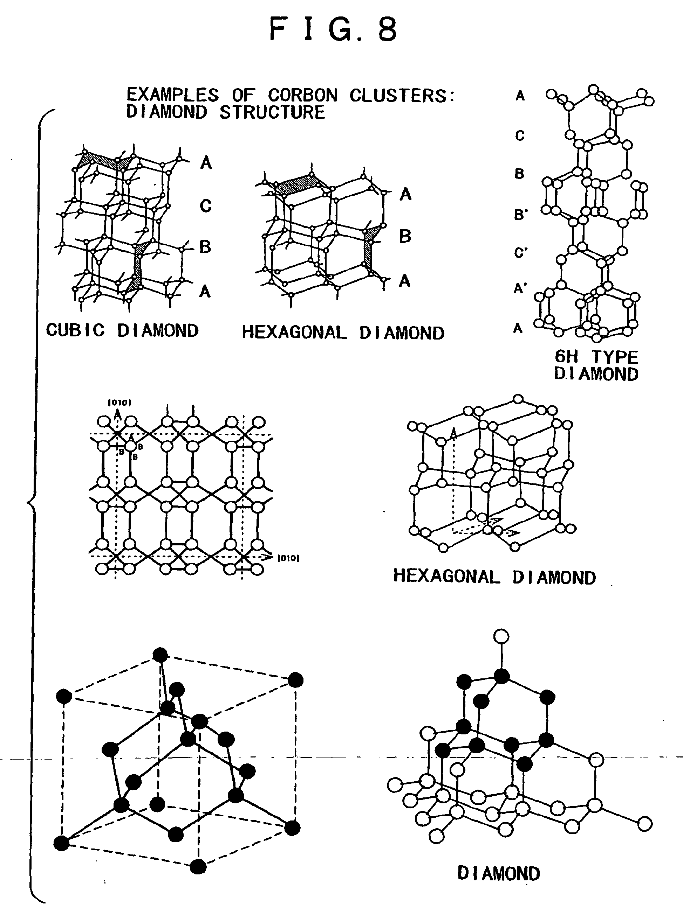

With most carbon atoms in sp³ bonding, the carbon cluster forms the diamond structure as shown in Fig. 8. With most carbon atoms in sp² bonding, the carbon cluster forms the plane structure of graphite or the entire or partial structure of fullerene or carbon nanotube. The one having the graphite structure is not suitable as the matrix of the proton conductor because it usually exhibits electron conductivity. By contrast, fullerene and carbon nanotube are suitable as the matrix of the proton conductor because they usually do not exhibit electron conductivity owing to their sp² bonding which has partly the elements of the sp³ bonding.

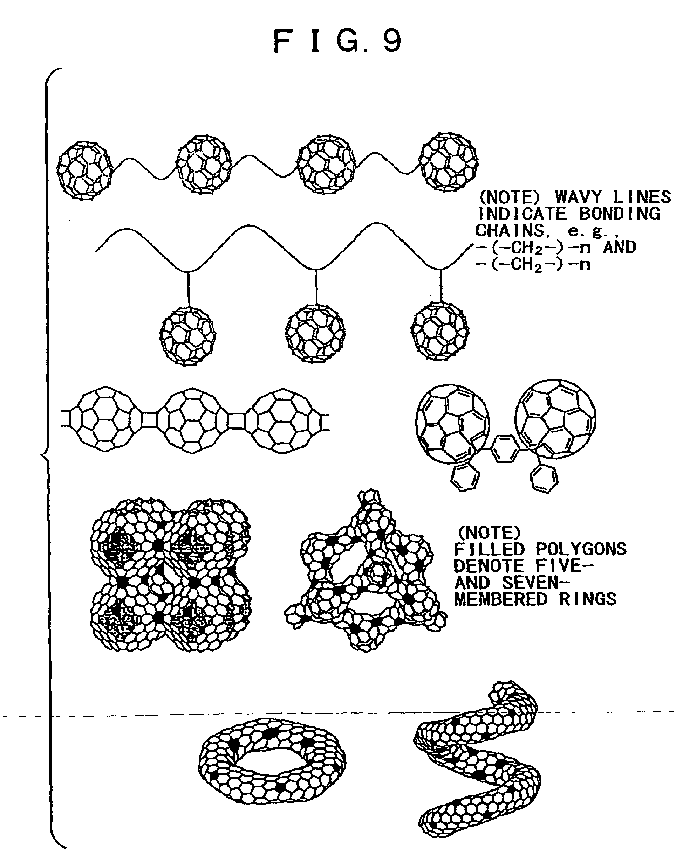

Fig. 9 shows some examples of clusters binding to each other. Clusters in such structure are also usable in the present invention.

The derivative of the carbon cluster as such can be formed by pressing into film or pellets without the help of binder. According to the present invention, the carbon cluster as the matrix should have a long axis shorter than 100 nm, preferably shorter than 100 Å. In addition, it should have two or more functional groups introduced thereinto.

Further, the carbon cluster should preferably be one which has the structure resembling a cage (as in fullerene molecules) or the structure with an open end in at least one part thereof. The fullerene with defective structure exhibits not only the fullerene's inherent reactivity but also enhanced reactivity due to the defective part (or the open part). Such enhanced reactivity promotes the introduction of the functional groups having proton dissociative groups. The result is a high ratio of introduction of functional groups and a high proton conductivity. Moreover, the carbon cluster can be produced in a much larger quantity and at a much lower cost than the fullerene mentioned above.

Another desirable matrix for the proton conductor is carbon in tubular or linear structure. The former includes carbon nanotube as a preferred example, and the latter includes carbon fiber as a preferred example.

The carbon nanotube or carbon fiber mentioned above readily releases electrons and has a very large surface area on account of its structure. This contributes to improvement in proton conducting efficiency.

The carbon nanotube or carbon fiber that can be used in the present invention may be produced by arc discharge method or chemical vapor deposition (thermal CVD).

The arc discharge method employs an arc discharge chamber filled with helium (at, say, 150 Torr) in which arc discharge takes place in the presence of a metal catalyst such as FeS, Ni, and Co. Arc discharge yields carbon nanotube sticking to the inner wall of the chamber. Arc discharging in the presence of catalyst gives rise to carbon nanotube with a small diameter, whereas arc discharging in the absence of catalyst gives rise to carbon nanotube with a large diameter.

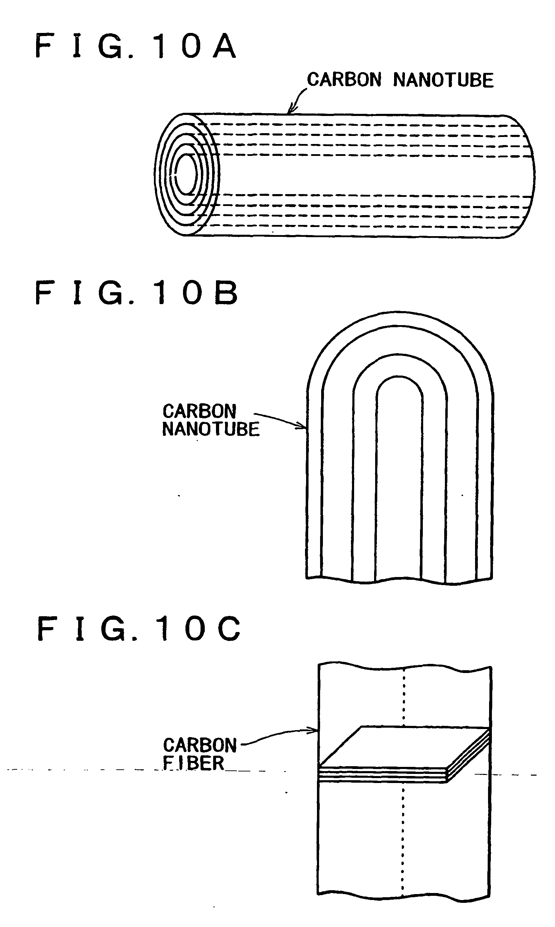

The carbon nanotube produced by arc discharging in the absence of catalyst is multilayered carbon nanotube with graphene structure (cylindrical structure) as shown in Fig. 10A (perspective view) and Fig. 10B (partly sectional view). This carbon nanotube is defect-free high-quality one and is known as a high-performance electron releasing material.

The carbon nanotube produced by the arc discharge method can have the functional groups (each having proton dissociative groups) attached thereto through the three- or many-membered ring structure as mentioned above. The thus obtained derivative also exhibits good proton conductivity in a dry state.

The chemical vapor deposition yields the above-mentioned carbon nanotube or carbon fiber by reaction of hydrocarbon (such as acetylene, benzene, and ethylene) or carbon monoxide with fine particles of transition metal or a substrate of transition metal or a substrate coated with transition metal. As the result of reaction, the desired carbon nanotube or carbon fiber deposits on the substrate.

For example, the reaction of toluene/H₂ mixture gas (at a flow rate of, say, 100 sccm) with a nickel substrate placed in an alumina tube heated at 700°C yields the carbon fiber having the structure as shown in Fig. 10C (perspective view).

The carbon nanotube should preferably have an aspect ratio or 1:1000 to 1:10. The carbon fiber should preferably have an aspect ratio of 1:5000 to 1:10. The tubular or linear carbon should preferably have a diameter of 0.001 to 0.5 µm and a length of 1 to 5 µm.

The invention will be described in more detail with reference to the following examples.

### Example 1

### Synthesis of phosphonate-modified fullerene derivative C₆₀=C(PO(OH)₂)₂

The synthesis of phosphonate-modified fullerene derivative (C₆₀=C(PO(OH)₂)₂) was started with the synthesis of its precursor (C₆₀=C(PO(OEt)₂)₂) according to the procedure described in literature (Cheng, F.; Yang, X.; Zhu, H.; and Song, Y. "Tetrahedron Letters 41(2000), page 3947-3950").

One gram (1.39 mmol) of C₆₀ was dissolved in 600 ml of dehydrated toluene. To the toluene solution were added 353 mg (1.39 mmol) of iodine and 2 g of NaI. To the toluene solution was further added with stirring 0.338 ml (1.39 mmol) of tetraethyl methylene diphosphonate. The resulting solution was stirred under an argon atmosphere at room temperature for 24 hours. The solution was filtered to separate precipitates, which were washed with copious amounts of CHCl₃. The resulting solution was evaporated to dryness by using a rotary evaporator. The residues were washed with copious amounts of alcohol. Upon drying the washed residues, there was obtained the desired precursor of the phosphonate-modified fullerene derivative.

One gram of the thus obtained precursor of the phosphonate-modified fullerene derivative was added to 50 ml of 1M NaOH solution. The NaOH solution was stirred at 60°C for 1 to 30 hours to effect hydrolysis. The resulting solution underwent proton ion exchange. Thus there was obtained the desired phosphonate-modified fullerene derivative C₆₀=C(PO(OH)₂)₂.

The above-mentioned synthesis proceeds according to the following scheme.

C₆₀ + CH₂(PO(OEt)₂)₂ → C₆₀=C(PO(OEt)₂)₂ → C₆₀=C(PO(ONa)₂)₂ → C₆₀=C(PO(OH)₂)₂

One molecule of the fullerene as the matrix can accept 1 to 30 functional groups depending on the molar ratio of fullerene to other raw materials in synthesis. In an extreme case, all the double bonds in one molecule of fullerene may receive the functional groups. As the number of the functional groups increases in the fullerene molecule, the number of protons increases and the fullerene derivative increases in conductivity.

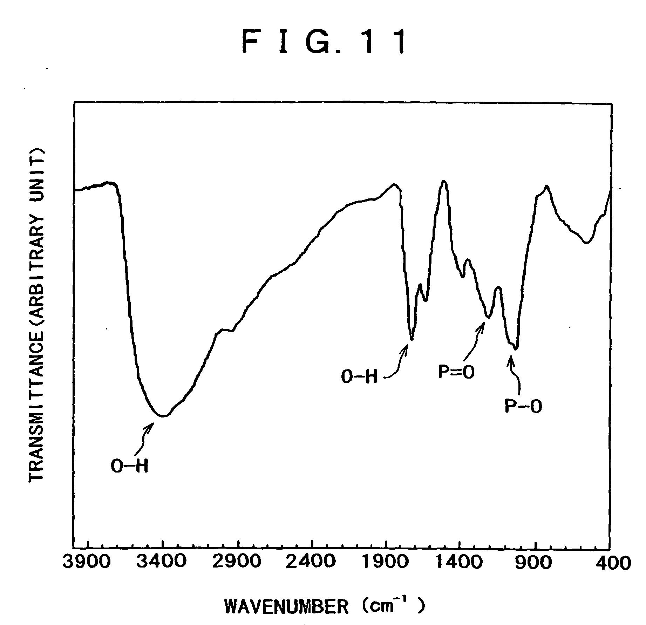

The phosphonate-modified fullerene derivative C₆₀=C(PO(OH)₂)₂ obtained as mentioned above was analyzed by FT-IR. The results are shown in Fig. 11. The intense peaks at 3440 cm⁻¹ and 1650 cm⁻¹ are probably due to the stretching vibration of the O-H bond of water. The peak at 1723 cm⁻¹ is probably due to the -OH group binding directly to C₆₀ that occurs during hydrolysis in the NaOH solution. The intense and sharp peaks at 1210 cm⁻¹ and 1042 cm⁻¹ are probably due to P=O and P-O bonds, respectively.

### Example 2

### Synthesis of phosphonate-modified fullerene derivative C₆₀= (C(PO(OH)₂)₂)₂

One gram (1.39 mmol) of C₆₀ was dissolved in 600 ml of dehydrated toluene. To the toluene solution were added 706 mg (2.78 mmol) of iodine and 4 g of NaI. To the toluene solution was further added with stirring 0.676 ml (2.78 mmol) of tetraethyl methylene diphosphonate. The resulting solution was stirred under an argon atmosphere at room temperature to 50°C for 24 to 72 hours. The solution was filtered to separate precipitates, which were washed with copious amounts of CHCl₃. The resulting solution was evaporated to dryness by using a rotary evaporator. The residues were washed with copious amounts of alcohol. Upon drying the washed residues, there was obtained the desired precursor of the phosphonate-modified fullerene derivative.

One gram of the thus obtained precursor of the phosphonate-modified fullerene derivative was added to 50 ml of 1M NaOH solution. The NaOH solution was stirred at 100°C for 1 to 30 hours to effect hydrolysis. The resulting solution underwent proton ion exchange. Thus there was obtained the desired phosphonate-modified fullerene derivative (C₆₀=C(PO(OH)₂)₂).

The above-mentioned synthesis proceeds according to the following scheme.

C₆₀ + 2CH₂(PO(OEt)₂)₂ → C₆₀= (C(PO(OEt)₂)₂)₂ → C₆₀= (C(PO(ONa)₂)₂)₂ → C₆₀= (C(PO(OH)₂)₂)₂

The phosphonate-modified fullerene derivative C₆₀=(C(PO(OH)₂)₂)₂ obtained as mentioned above was analyzed by FT-IR. The results are almost identical with those shown in Fig. 11 in Example 1.

### Example 3

### Thermal analysis of phosphonate-modified fullerene derivatives obtained in Examples 1 and 2

The phosphonate-modified fullerene derivatives obtained in Examples 1 and 2 were tested for thermal stability by TG-DTA and RGA (residual gas analysis).

### TG measurement:

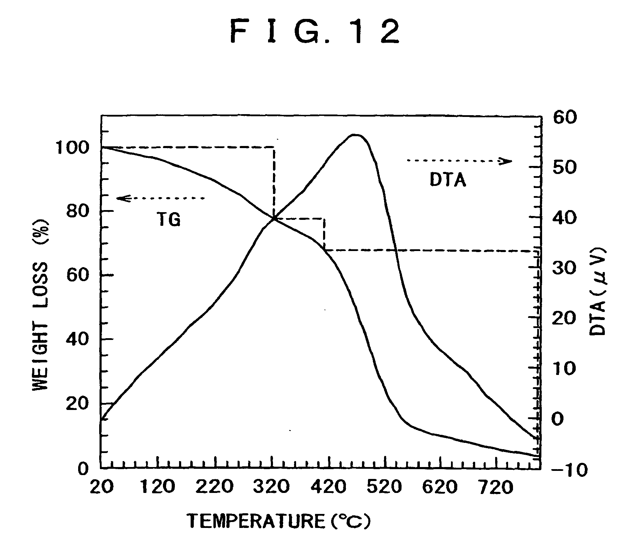

The phosphonate-modified fullerene derivatives obtained in Example 1 [C₆₀=C (PO(OH)₂)₂ in which the ratio of C₆₀ to C(PO(OH)₂)₂ is 1:1] was tested for TG-DTA in dry air, with the temperature rising at a rate of 5°C/min. The results are shown in Fig. 12. It is apparent from Fig. 12 that weight loss takes place roughly in three stages. Weight loss that takes place at room temperature to about 300°C is due to evaporation of water. Weight loss that takes place at about 300°C to about 400°C is due to decomposition of sample. The final weight loss is due to decomposition of fullerene.

### RGA measurement:

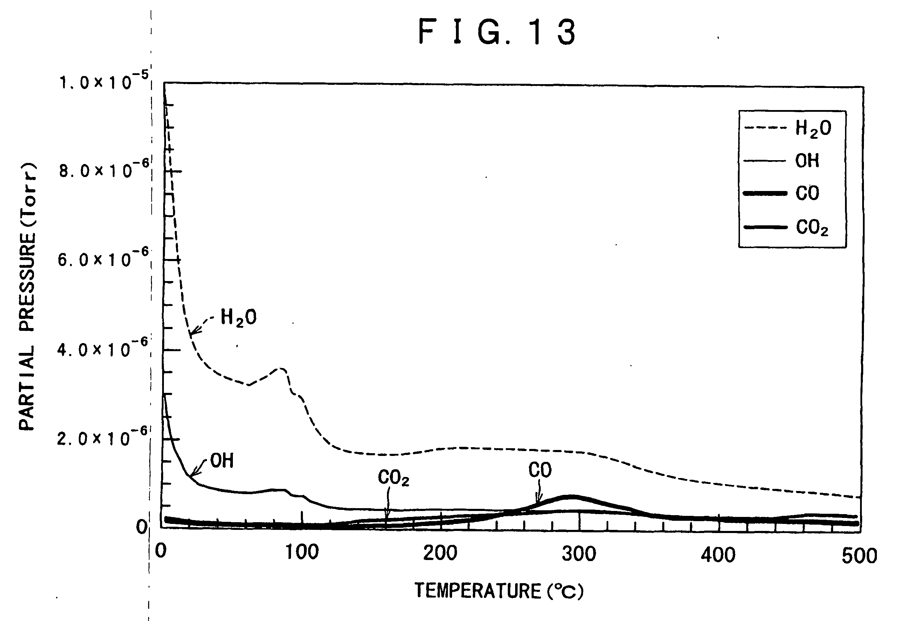

RGA involves determination of gas released from the sample being decomposed. The sample is heated in a vacuum at a rate of 2°C/min. The results are shown in Fig. 13. The thin broken line represents the partial pressure of water. The detection of CO₂ and CO began when the temperature exceeded 200°C. The peak of CO appeared at about 300°C.

As shown in Figs. 12 and 13, the results of TG and RGA measurement indicate that the phosphonate-modified fullerene derivative obtained in Example 1 retains its heat resistance up to 200°C and it begins to gradually decompose at 200°C, with decomposition reaching a peak at 300°C.

### Example 4

### Production of pellets of phosphonate-modified fullerene derivatives obtained in Examples 1 and 2

Samples (in powder form) of the phosphonate-modified fullerene derivatives obtained in Examples 1 and 2 were pressed in one direction to give a round pellet, 4 mm in diameter and 300 µm in thickness. Owing to their good moldability, they were easily made into pellets without the help of binder resin. The resulting pellets are designated as the pellet of Example 1 and the pellet of Example 2.

### Example 5

### Measurement of proton conductivity of pellets of phosphonate-modified fullerene derivatives obtained in Examples 1 and 2

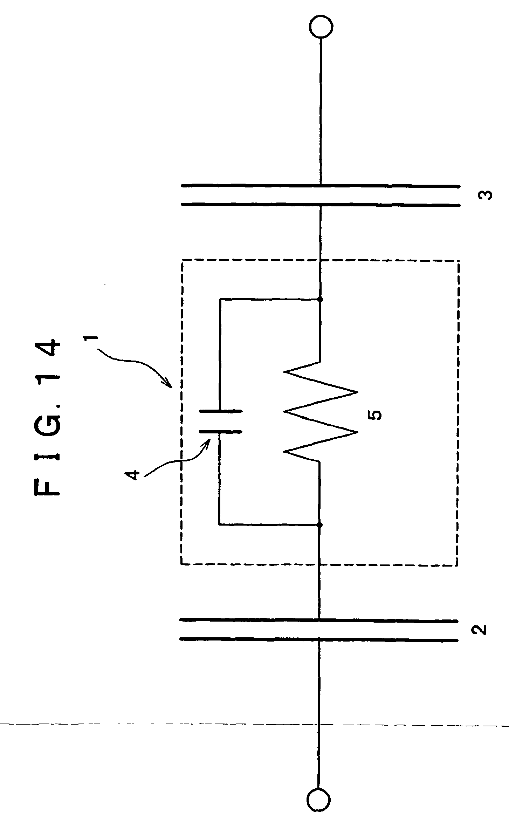

The pellets of Examples 1 and 2, which were prepared in Example 4, were tested for proton conductivity as follows. A pellet sample was held between two metal plates, across which an AC voltage of 0.1V was applied. AC complex impedance was measured, with frequencies varied from 7 MHz to 1 Hz, in the atmospheric air without humidification. The pellet sample may be electrically represented by an equivalent circuit shown in Fig. 14. This equivalent circuit consists of a proton conducting part 1, a first electrode 2, a second electrode 3, a capacitance 4, and a resistance 5. The capacitance 5 represents the phase lag due to high frequencies which occurs when protons migrate. The resistance 5 represents the ease with which protons migrate.

The proton conductor represented by the equivalent circuit has an impedance Z written as Z = Re(Z) + i·Im(Z) which depends on frequencies.

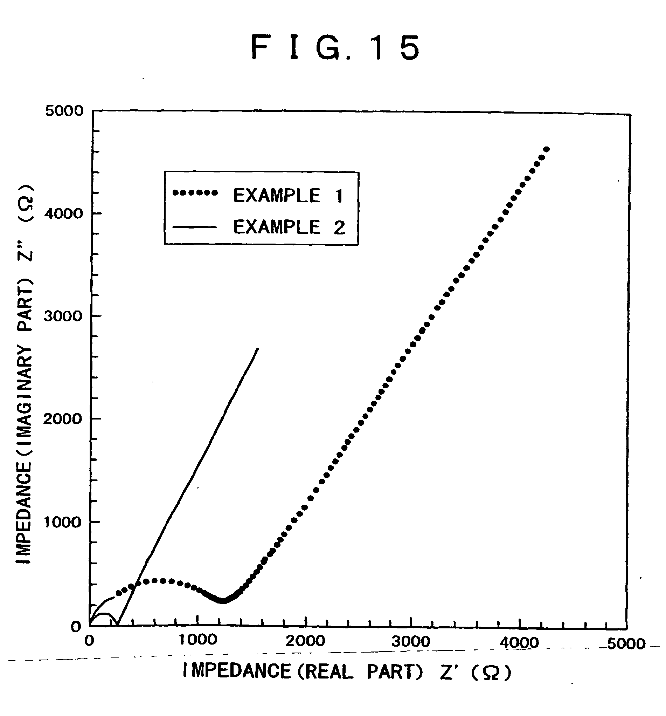

A Cole-Cole plot was drawn (as shown in Fig. 15) from the results of measurements, and AC resistance was calculated from it. It turned out that the pellets of Examples 1 and 2 have a proton conductivity of 1.8 × 10⁻⁴ S cm⁻¹ and 8.4 × 10⁻⁴ S cm⁻¹, respectively. The higher proton conductivity in the pellet of Example 2 is due to more functional groups binding to the fullerene molecule as the matrix.

### Example 6

### Synthesis of precursor C₆₀= (C(PO(OEt)₂)₂)ₙ of phosphonate-modified fullerene derivative

One gram (1.39 mmol) of C₆₀ was dissolved in 600 ml of dehydrated toluene. To the toluene solution were added 8.82 g (34.75 mmol) of iodine and 10 g of NaI. To the toluene solution was further added with stirring 8.45 ml (34.75 mmol) of tetraethyl methylene diphosphonate. The resulting solution was stirred under an argon atmosphere at room temperature to 50°C for 24 to 72 hours. The solution was filtered to separate precipitates, which were washed with copious amounts of CHCl₃. The resulting solution was evaporated to dryness by using a rotary evaporator. The residues were washed with copious amounts of alcohol. Upon drying the washed residues, there was obtained the desired precursor of the phosphonate-modified fullerene derivative. The precursor C₆₀= (C(PO(OEt)₂)₂)ₙ was analyzed by MALDI-TOF-MS to find that the maximum value of n is 9.

The above-mentioned synthesis may be represented by the following scheme.

C₆₀ + 12CH₂(PO(OEt)₂)₂ → C₆₀=(C(PO(OEt)₂)₂)₁₂

One molecule of the fullerene (C₆₀) as the matrix can accept 1 to 30 functional groups depending on the molar ratio of fullerene to other raw materials in synthesis. In an extreme case, all the double bonds in one molecule of fullerene may receive the functional groups. As the number of the functional groups increases in the fullerene molecule, the number of protons increases and the fullerene derivative increases in conductivity.

### Example 7

### Synthesis (1) of sulfonate-modified fullerene derivative C₆₀= (C(SO₃H)₂) n

One gram (1.39 mmol) of C₆₀ was dissolved in 400 ml of dehydrated toluene. To the toluene solution were added 3.53 g (13.9 mmol) of iodine and 5 g of NaI. To the toluene solution was further added with stirring an excess amount of 2.96 g (13.9 mmol) of methane disulfonic acid chloride CH₂(SO₂Cl)₂. The resulting solution was stirred under an argon atmosphere at room temperature for 24 to 96 hours. Unreacted impurities were washed with copious amounts of toluene, diethyl ether, and hexane. There was obtained a precursor C₆₀= (C(SO₂Cl)₂)ₙ of sulfonate-modified fullerene derivative.

One gram of the thus obtained precursor of the sulfonate-modified fullerene derivative was added to 100 ml of 1M NaOH solution. The NaOH solution was stirred at room temperature for 1 to 30 hours to effect hydrolysis. The resulting solution underwent proton ion exchange. Thus there was obtained the desired sulfonate modified fullerene derivative C₆₀=(C(SO₃H)₂)ₙ. It was examined by MALDI-TOF-MS and elemental analysis to find that the value of n ranges from 4 to 6.

The above-mentioned synthesis proceeds according to the following scheme.

C₆₀ + CH₂(SO₃Cl)₂ → C₆₀ = (C(SO₂Cl)₂)ₙ → C₆₀= (C(SO₃Na)₂)ₙ → C₆₀= (C(SO₃H)₂)ₙ

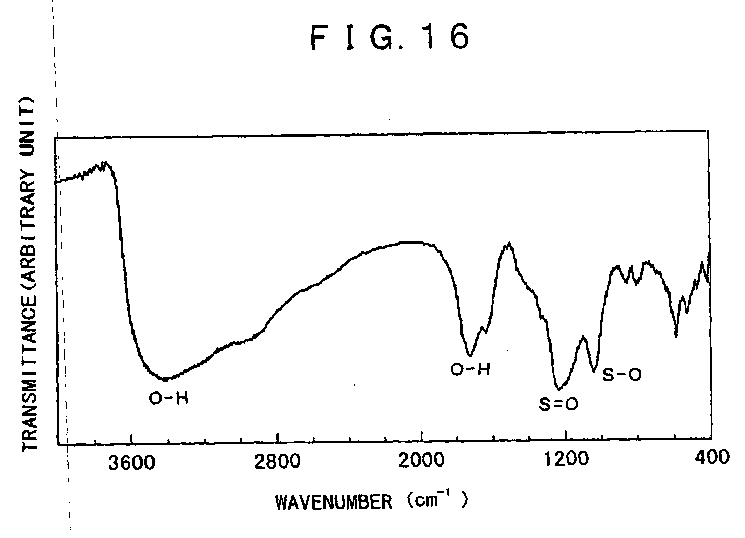

The thus obtained sulfonate-modified fullerene derivative was analyzed by FT-IR. The results are shown in Fig. 16. The intense peaks at 3436 cm⁻¹ and 1635 cm⁻¹ are probably due to the O-H bond of water. The intense peak at 1720 cm⁻¹ is probably due to the -OH group binding directly to C₆₀ that occurs during hydrolysis in the NaOH solution. The intense peaks at 1232 cm⁻¹ and 1026 cm⁻¹ are probably due to S=O and S-O bonds, respectively.

### Production of pellets of sulfonate-modified fullerene derivative obtained in Example 7 and measurement of proton conductivity

The sulfonate-modified fullerene derivative obtained in Example 7 was made into a pellet (4 mm in diameter and 1.12 mm in thickness) in the same way as in Example 4. The pellet sample was held between two metal plates, across which an AC voltage of 0.1V was applied. AC complex impedance was measured, with frequencies varied from 7 MHz to 1 Hz, in the atmospheric air without humidification.

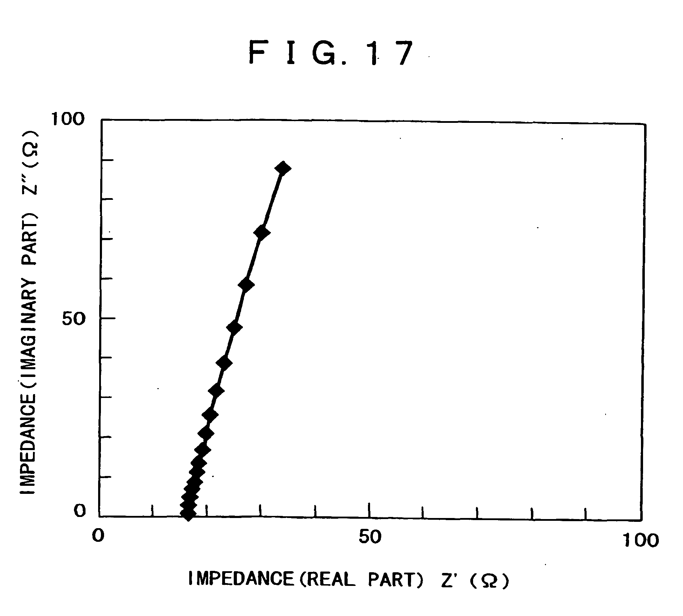

A Cole-Cole plot was drawn (as shown in Fig. 17) from the results of measurements. The straight line is typical of a sample with a high proton conductivity. The intersection of the straight line and the abscissa (for the imaginary part of impedance) represents the AC resistance of the sample. The proton conductivity calculated from the AC resistance was 5.6 × 10⁻² S cm⁻¹. The higher proton conductivity compared with the pellets of Examples 1 and 2 is due to more functional groups binding to the fullerene molecule as the matrix. (The more the functional groups, the more the protons.)

### Example 8

### Synthesis (2) of sulfonate-modified fullerene derivative C₆₀= (C(SO₃H)₂)ₙ

One gram (1.39 mmol) of C₆₀ was dissolved in 400 ml of dehydrated toluene. To the toluene solution were added 3.53 g (13.9 mmol) of iodine and 5 g of NaI. To the toluene solution was further added with stirring an excess amount of 3.22 g (13.9 mmol) of methane disulfonic acid diethyl ester CH₂(SO₂OEt)₂. The resulting solution was stirred under an argon atmosphere at room temperature for 24 to 96 hours. Unreacted impurities were washed with copious amounts of toluene, diethyl ether, and hexane. There was obtained a precursor C₆₀=(C(SO₂OEt)₂)ₙ of sulfonate-modified fullerene derivative.

One gram of the thus obtained precursor of the sulfonate-modified fullerene derivative was added to 100 ml of 1M NaOH solution. The NaOH solution was stirred at room temperature or 50°C for 1 to 30 hours to effect hydrolysis. The resulting solution underwent proton ion exchange. Thus there was obtained the desired sulfonate-modified fullerene derivative C₆₀=(C(SO₃H)₂)ₙ. It was examined by MALDI-TOF-MS and elemental analysis to find that the value of n ranges from 4 to 6.

The above-mentioned synthesis proceeds according to the following scheme.

C₆₀ + CH₂(SO₃OEt)₂ → C₆₀= (C(SO₂OEt)₂)ₙ → C₆₀= (C(SO₃Na)₂)ₙ → C₆₀= (C(SO₃H)₂)ₙ

The thus obtained sulfonate-modified fullerene derivative was analyzed by FT-IR. The result was almost identical to that shown in Fig. 16 in Example 7. The sample was made into a pellet, which was tested for proton conductivity. The result was almost identical to that in Example 7.

### Exploitation in Industry

The present invention provides a proton conductor which comprises a derivative of a substance having functional groups binding thereto, said substance being composed of at least one species selected from the group consisting of fullerene molecules, clusters composed mainly of carbon, and linear or tubular carbon structures, and said functional groups having proton dissociative groups and binding to said substance. This proton conductor is less dependent on the atmosphere and exhibits high proton conductivity continuously in dry air at high temperatures.

The functional groups have proton dissociative groups and bind to the substance through a three- or many-membered ring structure. This contributes to improved thermal resistance and chemical stability.

The present invention provides a method for producing the proton conductor. This method permits easy and efficient production of the proton conductor having the above-mentioned outstanding characteristics. Thus, it helps reduce production cost and realizes synthesis in large quantities.

The present invention provides an electrochemical device an electrochemical device which comprises a first electrode, a second electrode, and a proton conductor held between these two electrodes. The proton conductor is that formed from the above-mentioned derivative, and hence it produces the same effect as mentioned above. This electrochemical device operates without any humidifier; therefore, it helps realize a small-sized simple system.

## Claims

1. An electrochemical device which comprises a first electrode, a second electrode, and a proton conductor held between these two electrodes, said proton conductor being a substance having functional groups binding thereto, said substance being composed of at least one species selected from the group consisting of fullerene molecules, clusters composed mainly of carbon, and linear or tubular carbon structures, and said functional groups having proton dissociative groups and binding to said substance through a three- or many-membered ring structure.

2. The electrochemical device as defined in Claim 1, functional groups being represented by the general formula (1) or (2) below. 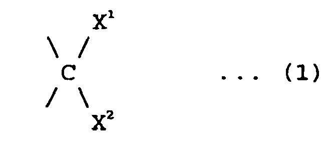 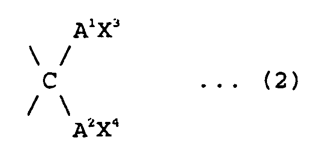 where X¹ and/or X², and X³ and/or X⁴, are identical or different proton dissociative groups, and A¹ and A² are identical or different alkylene moieties represented by any of -O-, -R-, -O-R-, -R-O-, -O-R-O- and -R-O-R- (where R is CₓH_{y} (x is an integer of 1 to 20 and y is an integer of 0 to 40)).

3. The electrochemical device according to claim 1, wherein said functional groups being represented by the general formula (3) below. 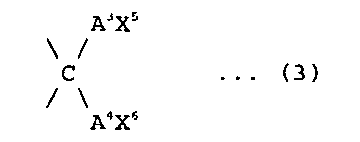 where X⁵ and/or X⁶ are identical or different proton dissociative groups, and A³ and A⁴ are identical or different fluorinated alkylene moieties represented by any of -O-, -R'-, -O-R'-, -R'-O-, -O-R'-O-, and -R'-O-R''- (where R' and R" are C_{x'}F_{y'}H_{z'} (x' is an integer of 1 to 20, y' is an integer of 1 to 40, and z' is an integer of 0 to 39)).

4. The electrochemical device according to any of Claims 1 to 3, wherein the fullerene molecule is a spherical carbon cluster molecule Cₘ (where m is a natural number of 36, 60, 70, 76, 78, 80, 82, 84, 86, 88, 90, 92, 94, 96, and the like which permits carbon atoms to form the spherical molecule).

5. The electrochemical device according to any of Claims 1 to 3, wherein the derivative has 1 to 30 functional groups binding thereto.

6. The electrochemical device according to any of Claims 1 to 3, wherein at least one of the proton dissociative groups is -PO(OH)₂, -SO₃H, or -COOH.

7. The electrochemical device according to any of Claims 1 to 6 containing therein a carbonaceous material represented by the molecular formula (1) or (2) below.
Molecular formula (1) : C₆₀= (C(PO(OH)₂)₂)ₙ
Molecular formula (2) : C₆₀= (C(SO₃H)₂)ₙ
(where n is 1 to 30).

8. The electrochemical device as defined in Claim 1, which is so constructed as to function as a fuel cell, with the first electrode being supplied with fuel and the second electrode being supplied with oxygen.

9. A method for producing a proton conductor, which comprises a step of preparing a derivative of a substance having functional groups binding thereto, said substance being composed of at least one species selected from the group consisting of fullerene molecules, clusters composed mainly of carbon, and linear or tubular carbon structures, and said functional groups having ester groups as the precursor of proton dissociative groups and binding to said substance through a three- or many-membered ring structure; a step of hydrolyzing the derivative with alkali hydroxide; and a step of subjecting the hydrolyzate to ion exchange, thereby forming the proton dissociative groups.

10. Use of a proton conductor as defined in any of Claims 1 to 8 in an electrochemical device.

## Patentansprüche

1. Elektrochemische Vorrichtung, die eine erste Elektrode, eine zweite Elektrode und einen zwischen diesen zwei Elektroden gehaltenen Protonenleiter aufweist, wobei der Protonenleiter ein Stoff mit daran angelagerten funktionellen Gruppen ist, wobei der Stoff aus wenigstens einer Art besteht, die ausgewählt ist aus der Gruppe bestehend aus Fullerenmolekülen, Clustern hauptsächlich aus Kohlenstoff, und linearen oder röhrenförmigen Kohlenstoffstrukturen, und wobei die funktionellen Gruppen protonendissoziierende Gruppen haben und an dem Stoff durch eine drei- oder mehrelementige Ringstruktur angelagert sind.

2. Elektrochemische Vorrichtung nach Anspruch 1, bei welcher die funktionellen Gruppen durch die nachfolgende allgemeine Formel (1) oder (2) dargestellt sind: 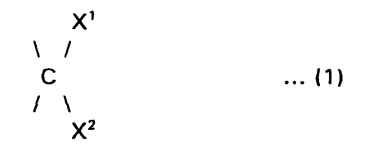 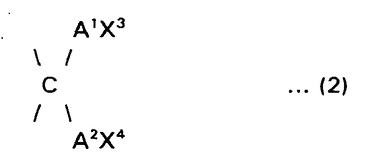 wobei X¹ und/oder X² und X³ und/oder X⁴ identische oder unterschiedliche protonendisoziierende Gruppen sind, und A¹ und A² identische oder unterschiedliche Alkylenkomponenten sind, die durch irgendeine Komponente von -O-, -R-, -O-R-, -R-O-, -O-R-O- und -R-O-R- dargestellt sind (wobei R CₓH_{y} ist (x ist eine ganze Zahl von 1 bis 20 und y ist eine ganze Zahl von 0 bis 40)).

3. Elektrochemische Vorrichtung nach Anspruch 1, bei welcher die funktionellen Gruppen durch die nachfolgende allgemeine Formel (3) dargestellte sind: 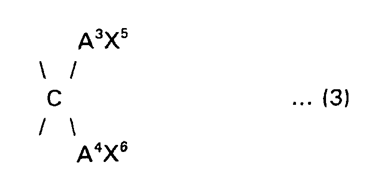 wobei X⁵ und/oder X⁶ identische oder unterschiedliche protonendisoziierende Gruppen sind, und A³ und A⁴ identische oder unterschiedliche fluorierte Alkylenkomponenten sind, die durch irgendeine Komponente von -O-, -R'-, -O-R'-, -R'-O-, -O-R'-O- und -R'-O-R"- dargestellt sind (wobei R' und R" C_{x'}F_{y'}H₂. sind (x' ist eine ganze Zahl von 1 bis 20, y' ist eine ganze Zahl von 1 bis 40, und z' ist eine ganze Zahl von 0 bis 39)).

4. Elektrochemische Vorrichtung nach einem der Ansprüche 1 bis 3, bei welcher das Fullerenmolekül ein sphärisches Kohlenstoffclustermolekül Cₘ ist (wobei m eine natürliche Zahl von 36, 60, 70, 76, 78, 80, 82, 84, 86, 88, 90, 92, 94, 96 und dergleichen ist, die Kohlenstoffatome das sphärische Molekül bilden lässt).

5. Elektrochemische Vorrichtung nach einem der Ansprüche 1 bis 3, bei welcher das Derivat 1 bis 30 daran angelagerte funktionelle Gruppen hat.

6. Elektrochemische Vorrichtung nach einem der Ansprüche 1 bis 3, bei welcher wenigstens eine der protonendissoziierenden Gruppen -PO(OH)₂, -SO₃H oder -COOH ist.

7. Elektrochemische Vorrichtung nach einem der Ansprüche 1 bis 6, mit einem kohlenstoffhaltigem Material darin, das durch die nachfolgende Molekülformel (1) oder (2) dargestellt ist:
Molekülformel (1) : C₆₀= (C(PO(OH)₂)₂)ₙ
Molekülformel (2) : C₆₀= (C(SO₃H)₂)ₙ
(wobei n 1 bis 30 ist).

8. Elektrochemische Vorrichtung nach Anspruch 1, welche so konstruiert ist, dass sie als eine Brennstoffzelle funktioniert, wobei der ersten Elektrode ein Brennstoff zugeführt wird und der zweiten Elektrode Sauerstoff zugeführt wird.

9. Verfahren zum Herstellen eines Protonenleiters, welches aufweist: einen Schritt des Vorbereitens eines Derivativs eines Stoffes mit daran angelagerten funktionellen Gruppen, wobei der Stoff aus wenigstens einer Art besteht, die ausgewählt ist aus der Gruppe bestehend aus Fullerenmolekülen, Clustern hauptsächlich aus Kohlenstoff, und linearen oder röhrenförmigen Kohlenstoffstrukturen, und wobei die funktionellen Gruppen Estergruppen als Vorstufe der protonendissoziierden Gruppen haben und an den Stoff durch eine drei- oder mehrelementige Ringstruktur angelagert sind; einen Schritt des Hydrolysierens des Derivats mit Alkalihydroxid; einen Schritt des Unterziehens des Hydrolysats einem Ionenaustausch, wodurch die protonendissoziierenden Gruppen gebildet werden.

10. Verwendung eines Protonenleiters nach einem der Ansprüche 1 bis 8 in einer elektrochemischen Vorrichtung.

## Revendications

1. Dispositif électrochimique qui comprend une première électrode, une deuxième électrode, et un conducteur de protons retenu entre ces deux électrodes, ledit conducteur de protons étant une substance ayant des groupes fonctionnels qui s'y fixent, ladite substance étant composée d'au moins une espèce choisie dans le groupe constitué par les molécules de fullerène, les agrégats composés principalement de carbone, et les structures carbonées linéaires ou tubulaires, et lesdits groupes fonctionnels ayant des groupes dissociant les protons et se fixant à ladite substance par l'intermédiaire d'une structure cyclique à trois chaînons ou plus.

2. Dispositif électrochimique selon la revendication 1, dans lequel les groupes fonctionnels sont représentés par la formule générale (1) ou (2) ci-dessous : 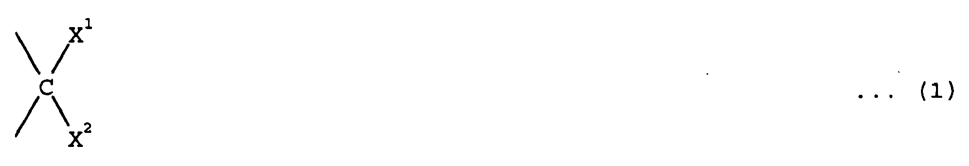 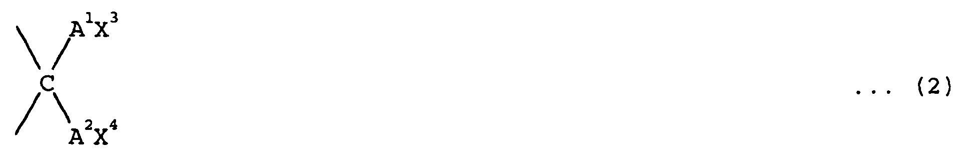 où X¹ et/ou X², et X³ et/ou X⁴, sont des groupes dissociant les protons, identiques ou différents, et A¹ et A² sont des fragments alkylène identiques ou différents représentés par l'un quelconque parmi -O-, -R-, -O-R-, -R-O-, -O-R-O- et -R-O-R- (où R est CₓH_{y} (x est un entier de 1 à 20 et y est un entier de 0 à 40)).

3. Dispositif électrochimique selon la revendication 1, dans lequel les groupes fonctionnels sont représentés par la formule générale (3) ci-dessous : 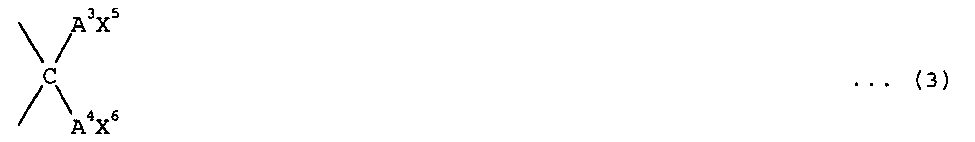 dans laquelle X⁵ et/ou X⁶ son des groupes dissociant les protons, identiques ou différents, et A³ et A⁴ sont des fragments fluoroalkylène identiques ou différents représentés par l'un quelconque parmi -O-, -R'-, -O-R'-, -R'-O-, -O-R'-O- et -R'-O-R"- (où R' et R" sont C_{x'}F_{y'}H_{z'} (x' est un entier de 1 à 20, y' est un entier de 1 à 40, et z' est un entier de 0 à 39)).

4. Dispositif électrochimique selon l'une quelconque des revendications 1 à 3, dans lequel la molécule de fullerène est une molécule d'agrégat carbonée sphérique Cₘ (où m est le nombre entier 36, 60, 70, 76, 78, 80, 82, 84, 86, 88, 90, 92, 94, 96 ou analogue qui permet aux atomes de carbone de former la molécule sphérique).

5. Dispositif électrochimique selon l'une quelconque des revendications 1 à 3, dans lequel le dérivé a de 1 à 30 groupes fonctionnels se fixant à celui-ci.

6. Dispositif électrochimique selon l'une quelconque des revendications 1 à 3, dans lequel au moins l'un des groupes dissociant les protons est -PO(OH)₂, -SO₃H ou -COOH.

7. Dispositif électrochimique selon l'une quelconque des revendications 1 à 6, contenant un matériau carboné, représenté par la formule moléculaire (1) ou (2) ci-dessous :
formule moléculaire (1) : C₆₀= (C(PO(OH)₂)₂)ₙ
formule moléculaire (2): C₆₀= (C(SO₃H)₂)ₙ
(où n vaut de 1 à 30).

8. Dispositif électrochimique selon la revendication 1, qui est construit de façon à fonctionner comme une pile à combustible, la première électrode étant alimentée en combustible et la deuxième électrode étant alimentée en oxygène.

9. Procédé pour produire un conducteur de protons, qui comprend une étape consistant à préparer un dérivé d'une substance ayant des groupes fonctionnels qui s'y fixent, ladite substance étant composée d'au moins une espèce choisie dans le groupe constitué par les molécules de fullerène, les agrégats composés principalement de carbone, et les structures carbonées linéaires ou tubulaires, et lesdits groupes fonctionnels ayant des groupes ester à titre de précurseur de groupes dissociant les protons et se fixant à ladite substance par l'intermédiaire d'une structure cyclique à trois chaînons ou plus ; une étape consistant à hydrolyser le dérivé avec un hydroxyde alcalin ; et une étape consistant à soumettre l'hydrolysat à un échange d'ions, formant ainsi les groupes dissociant les protons.

10. Utilisation d'un conducteur de protons tel que défini dans l'une quelconque des revendications 1 à 8, dans un dispositif électrochimique.
